# EUROPÄISCHE PATENTSCHRIFT

(11) **EP 2 087 371 B1**
(45) Veröffentlichungstag und Bekanntmachung des Hinweises auf die Patenterteilung: **01.05.2019**
(21) Anmeldenummer: 07846920.2
(22) Anmeldetag: 30.11.2007
(51) Int. Cl.: G01S 17/93, G01S 17/36, G01S 7/491

(54) **VERFAHREN ZUR ERFASSUNG EINER PHYSIKALISCHEN GRÖSSE UND VORRICHTUNG HIERFÜR**
METHOD FOR MEASURING A PHYSICAL VARIABLE AND DEVICE FOR SAID PURPOSE
PROCÉDÉ DE DÉTECTION D'UNE GRANDEUR PHYSIQUE ET DISPOSITIF À CET EFFET

(30) Priorität: 06.12.2006 DE 102006057495
(43) Veröffentlichungstag der Anmeldung: 12.08.2009
(73) Patentinhaber: Elmos Semiconductor Aktiengesellschaft, 44227 Dortmund (DE)
(72) Erfinder: SCHULER, Thomas, 75446 Wiernsheim (DE); LELEVE, Joel, 93800 Epinay sur Seine (FR)
(74) Vertreter: Durm Patentanwälte PartG mbB
(86) Internationale Anmeldenummer: PCT/EP2007/010395
(87) Internationale Veröffentlichungsnummer: WO 2008/067952

(56) Entgegenhaltungen:
- WO-A1-2007/012501
- DE-A1- 2 602 691
- DE-A1- 10 006 493
- DE-A1- 19 616 038
- DE-A1-102005 021 882
- DE-C1- 4 027 990
- US-A- 4 768 877

## Beschreibung

Die Erfindung betrifft ein Verfahren und eine Vorrichtung zur Erfassung eines Abstands der Vorrichtung zu einem Objekt oder einer Straßenoberfläche, an denen ein Sendesignal eines Senders reflektiert und von einer Empfangseinheit empfangen wird. Die Abstände werden anhand einer Phasendifferenz zwischen Empfangssignal und einem Referenzsignal bestimmt. Die für die Abstandsmessung verwendete Übertragungsstrecke wird jeweils neu ausgerichtet, um mit einer einzigen Vorrichtung bzw. einem Sender die Abstandsmessung zu einem Objekt und einer Straßenoberfläche durchführen zu können.

Aus dem Stand der Technik, der Druckschrift DE 100 06 493 A1, sind Abstandsmesser bekannt. Es ist nicht offenbart, dass der Abstand eines Kraftfahrzeugs von einer Straßenoberfläche und der Abstand von einem weiteren Objekt ermittelt werden und dass das Ermitteln der Abstände zur Straßenoberfläche und zum weiteren Objekt abwechselnd erfolgt. Die Druckschriften US 4 768 877 A, DE 196 16 038 A1, DE 26 02 691 A1, DE 40 27 990 C1 und DE 10 2005 021882 A1 zeigen weitere vorbekannte Entfernungsmesser.

Die Erfindung löst also die Aufgabe, einen Abstandssensor vorzuschlagen, um Abstände abwechselnd zu einem Objekt und der Straßenoberfläche zu messen.

Die Aufgabe wird gelöst durch ein Verfahren gemäß Anspruch 1 und eine Vorrichtung gemäß Anspruch 14.

Das erfindungsgemäße Verfahren weist die folgenden Schritte auf:
- Senden mindestens eines ersten Sendesignals mit einer vorgebbaren ersten Signalform über eine erste Übertragungsstrecke, deren Übertragungsfunktion von der zu erfassenden physikalischen Größe abhängt, wobei ein erstes Empfangssignal an einem Ausgang der ersten Übertragungsstrecke erhalten wird,
- Senden mindestens eines ersten Referenzsignals mit einer vorgebbaren Referenzsignalform über eine Referenzübertragungsstrecke, wobei die Referenzübertragungsstrecke vorzugsweise eine bekannte Übertragungsfunktion aufweist und wobei ein Referenzempfangssignal an einem Ausgang der Referenzübertragungsstrecke erhalten wird,
- Analysieren des ersten Empfangssignals und des Referenzempfangssignals, um auf die physikalische Größe zu schließen.

Die erfindungsgemäße Verwendung mindestens eines ersten Sendesignals und mindestens eines ersten Referenzsignals ermöglicht vorteilhaft eine flexible Analyse der empfangenen Signale, insbesondere auch eine differentielle Analyse, die die Kompensation von Störeinflüssen ermöglicht.

Vorteilhaft wird zur Analyse das erste Empfangssignal mit dem Referenzempfangssignal verglichen.

Das erste Sendesignal und das Referenzsignal weisen vorteilhaft jeweils von Null verschiedene Frequenzanteile auf, und die Zeitfunktionen der Signale sind so gewählt, dass sie sich zumindest über einen vorgebbaren Zeitbereich hinweg zu einem Gleichsignal addieren. Dadurch ist eine besonders einfache Auswertung möglich, die z.B. eine Ausregelung einer Amplitude eines der Signale oder einer Phasenbeziehung der Signale zueinander umfassen kann, mit dem Ziel, ein Gleichsignal als Summe beider Signale zu erhalten. Die Regelgrößen, die die Änderung der Amplitude bzw. Phasenlage beschreiben, enthalten vorteilhaft gleichzeitig Informationen über die erste Übertragungsstrecke, z.B. über die Dämpfung des ersten Sendesignals oder eine Verzögerung des ersten Sendesignals aufgrund von Laufzeiteffekten des ersten Sendesignals in der ersten Übertragungsstrecke bzw. generell über die Unterschiede zwischen den Übertragungsstrecken.

Vorteilhaft kann das erste Sendesignal und das Referenzsignal z.B. jeweils ein sinusförmiges oder rechteckförmiges Signal sein, wobei das erste Sendesignal eine vorgebbare Phasenverschiebung, insbesondere 180 Grad, zu dem Referenzsignal aufweist. Eine ggf. durch die erste Übertragungsstrecke verursachte Phasendifferenz zwischen den empfangenen Signalen, die von 180 Grad verschieden ist, beinhaltet Informationen über den Signalweg / die Laufzeit des Sendesignals.

Die Analyse weist folgende Schritte auf:
- Addieren des ersten Empfangssignals mit dem Referenzempfangssignal, um ein Summensignal zu erhalten,
- Auswerten vorgebbarer Zeitbereiche des Summensignals, um auf Phasenverschiebung und optional eine Dämpfung des Sendesignals durch die erste Übertragungsstrecke zu schließen,
- Rückschließen auf die physikalische Größe aus der Dämpfung und/oder Phasenverschiebung.

Das Auswerten vorgebbarer Zeitbereiche umfasst vorteilhaft das Integrieren des Summensignals über mehrere vorgebbare Zeitbereiche bzw. das Addieren des Summensignals über mehrere vorgebbare Zeitbereiche. Zeitbereiche im Sinne dieser Erfindung können hierbei im Falle periodischer Signale Periodendauern oder Teile hiervon sein; ganz allgemein sind auch beliebige Zeitbereiche zur Auswertung verwendbar, von denen vermutet wird, dass entsprechende Empfangssignale interessierende Informationen enthalten.

Die erfindungsgemäße Integration des Summensignals ermöglicht vorteilhaft auch die Auswertung verhältnismäßig hochfrequenter Signalanteile des Summensignals, ohne entsprechend schnelle elektronische Bauelemente bzw. Auswerteschaltungen vorsehen zu müssen. Hochfrequente Signalanteile des Summensignals, die beispielsweise mit Impulsbreiten im Nanosekundenbereich korrespondieren, können sich beispielsweise durch eine verhältnismäßig geringe Phasenabweichung zwischen den empfangenen Signalen ergeben, und würden bei einer herkömmlichen Auswertung, die eine Messung von Impulsbreiten vorsieht, ohne entsprechend schnelle Auswerteschaltung, die eine Bandbreite von einigen Hundert MHz oder mehr aufweist, nicht erkannt werden.

Durch die erfindungsgemäße Integration des Summensignals tragen demgegenüber vorteilhaft auch diejenigen Frequenzanteile des Summensignals noch zu einem auswertbaren Signal bei, die aufgrund des Tiefpassverhaltens der Auswerteschaltung bei einem einmaligen Auftreten zu keiner bereits für sich sinnvoll auswertbaren Signalamplitude führen würden. Da die erfindungsgemäße Integration eine Vielzahl dieser Signalanteile akkumuliert, ergeben sich auch mit herkömmlichen Schaltungen, die Grenzfrequenzen von einigen MHz aufweisen, verwertbare Signalamplituden bei Impulsbreiten im Nanosekundenbereich. Durch das Tiefpassverhalten der Auswerteschaltung werden die hochfrequenten Signalanteile, die Phasendifferenzinformationen der verschiedenen Übertragungsstrecken aufweisen, gleichsam "verschliffen"; die Amplitude des tatsächlich erhaltenen Summensignals beinhaltet jedoch immer noch die Phasendifferenzinformationen, die erfindungsgemäß ausgewertet werden. Dementsprechend bestimmt sich die Genauigkeit der erfindungsgemäßen Auswertung der Phasendifferenz durch die Präzision bei der Auswertung der Amplitude des Summensignals und kann z.B. durch die Anzahl der Integrationsschritte beeinflusst werden.

Bevorzugt werden bei einer weiteren Ausführungsform des erfindungsgemäßen Verfahrens jeweils unterschiedliche Zeitbereiche des Summensignals ausgewertet, um auf die Dämpfung und/oder Phasenverschiebung des Sendesignals durch die erste Übertragungsstrecke zu schließen.

Beispielsweise ist bei rechteckförmigen Sende- bzw. Referenzsignalen insbesondere derjenige Zeitbereich der empfangenen Signale bzw. des Summensignals zur Gewinnung von Phaseninformationen interessant, in dem die Signale einen Zustandswechsel, d.h. z.B. von High nach Low oder invers hierzu erfahren, während Informationen über Differenzen in der Amplitude empfangener Signale auch in anderen Zeitbereichen erhalten werden können.

Obwohl das erfindungsgemäße Verfahren auch mit kapazitiven und/oder induktiven oder akustischen bzw. sonstigen Signalen bzw. Übertragungsstrecken durchführbar wäre, wird ein als optisches Signal ausgebildetes erstes Sendesignal verwendet. Das Referenzsignal kann ebenfalls optisch oder auch ein rein elektrisches Signal sein.

Im Rahmen der erfindungsgemäßen Analyse der empfangenen Signale kann vorteilhaft z.B. auf einen Abstand von einem Sender des ersten Sendesignals zu einem Hindernis geschlossen werden, der sich z.B. aus einer Phasenverschiebung zwischen den entsprechend empfangenen Signalen ergibt. Die Übertragungsstrecke des ersten Sendesignals umfasst in diesem Fall den Weg von dem Sender zu dem Hindernis und den entsprechenden Rückweg des von dem Hindernis wieder zu der erfindungsgemäßen Vorrichtung reflektierten ersten Signals.

Das erfindungsgemäße Verfahren wird dazu verwendet, den Abstand eines oder mehrerer Bereiche, insbesondere einer Karosserie, eines Kraftfahrzeugs von einer Straßenoberfläche zu ermitteln. Beispielsweise können in den Stoßfängern des Kraftfahrzeugs mehrere erfindungsgemäße Vorrichtungen vorgesehen sein, die unter bevorzugter Verwendung optischer Sendesignale jeweils einen Abstand des betreffenden Bereichs des Kraftfahrzeugs zu der Straßenoberfläche erfassen. Obwohl prinzipiell z.B. auch Ultraschall- oder andere akustische sowie weitere Signale denkbar sind zur Abstandsmessung, eignen sich optische Signale Untersuchungen der Anmelderin zufolge besonders gut für den Kraftfahrzeugbereich, insbesondere aufgrund der hohen Präzision und der großen Lichtgeschwindigkeit, die kurze Messzyklen bei gleichzeitiger Verwendung verschiedener Übertragungsstrecken erlaubt.

Die erfindungsgemäß erfassten Abstände können vorteilhaft zur Durchführung einer Niveauregulierung und/oder Fahrdynamikregelung des Kraftfahrzeugs verwendet werden, da in Abhängigkeit entsprechender Abstandswerte für unterschiedliche Bereiche des Kraftfahrzeugs eine präzise Erfassung von Nick- und/oder Wankbewegungen des Kraftfahrzeugs möglich ist. Ganz besonders vorteilhaft kann eine von herkömmlichen Systemen bekannte und im Fahrwerk bzw. der Federung des Kraftfahrzeugs angeordnete Niveausensorik durch den Einsatz der vorliegenden Erfindung entfallen.

Die erfindungsgemäße Abstandsmessung zur Erfassung von Nick- und/oder Wankbewegungen des Kraftfahrzeugs ergänzt ferner vorteilhaft die bei herkömmlichen Fahrdynamiksystemen verwendeten Betriebsgrößen des Kraftfahrzeugs, so dass eine präzisere Fahrdynamikregelung möglich ist, wodurch die Fahrsicherheit insgesamt gesteigert wird.

Durch den Vergleich der Amplituden des empfangenen Sendesignals und des empfangenen Referenzsignals kann ferner vorteilhaft auf eine Reflektivität eines mit dem Sendesignal beaufschlagten Objekts geschlossen werden. Alternativ oder ergänzend zu der auf eine Straßenoberfläche bezogenen Abstandsmessung kann somit vorteilhaft gleichzeitig auch eine Fahrspurerkennung durchgeführt werden, indem aus der ermittelten Reflektivität auf das Vorhandensein bzw. Überfahren von Fahrbahnmarkierungen geschlossen wird.

Bei der vorliegenden Erfindung werden abwechselnd die Abstände zu einer Straßenoberfläche und zu einem weiteren Objekt, insbesondere einem anderen Kraftfahrzeug, ermittelt. Hierfür wird dieselbe erfindungsgemäße Vorrichtung eingesetzt ; allein eine zur Abstandsmessung verwendete Übertragungsstrecke ist je nach zu messender Größe relativ zu dem Kraftfahrzeug neu auszurichten, beispielsweise über einen Drehspiegel oder dergleichen, der das optische Sendesignal abwechselnd auf die Straßenoberfläche bzw. in Fahrtrichtung umlenkt.

Im Rahmen der erfindungsgemäßen Analyse der empfangenen Signale kann darüberhinaus vorteilhaft auch auf einen Zustand der Fahrbahn, insbesondere deren Oberflächenbeschaffenheit, geschlossen werden. Hierzu kann bereits die Auswertung eines der empfangenen Signale, z.B. seine zeitliche Änderung, genügen, für eine präzisere Analyse kann jedoch z.B. die Dämpfung des ersten Sendesignals im Vergleich zu dem Referenzsignal ausgewertet werden.

Vorteilhaft können überdies Sendesignale verschiedener Wellenlängen verwendet werden, beispielsweise um unterschiedlichen Oberflächenbeschaffenheiten einer befahrenen Straße Rechnung zu tragen oder um eine weitere Unabhängigkeit von Störlicht wie z.B. Umgebungslicht und dergleichen zu erreichen.

Eine weitere Variante des erfindungsgemäßen Verfahrens sieht vor, dass aus einem an einer Straßenoberfläche reflektierten Empfangssignal eine Geschwindigkeit des Kraftfahrzeugs über Grund ermittelt wird. Eine entsprechende Auswertung des Empfangssignals kann in dem Fachmann bekannter Weise in einer Steuereinheit der erfindungsgemäßen Vorrichtung erfolgen.

Als eine weitere Lösung der Aufgabe der vorliegenden Erfindung ist eine Vorrichtung gemäß Patentanspruch 14 angegeben, die zur Ausführung des erfindungsgemäßen Verfahrens ausgebildet ist.

Die erfindungsgemäße Vorrichtung kann vorteilhaft direkt in einen Stoßfänger, insbesondere für ein Kraftfahrzeug, integriert sein.

Als besonders vorteilhaft hat sich auch eine Auswertung von statistischen Eigenschaften des Empfangssignals und/oder der physikalischen Größe, insbesondere eines Abstands, erwiesen. Sofern ein mittels dem erfindungsgemäßen Verfahren ermittelter Abstand von dem Sender zu einem Hindernis spezielle statistische Eigenschaften aufweist, kann hieraus beispielsweise auf das Vorhandensein eines Aerosols wie z.B. Nebel oder Gischt in der ersten Übertragungsstrecke geschlossen werden, weil die Wassertröpfchen des Nebels die Übertragungsfunktion der ersten Übertragungsstrecke und damit auch einen hieraus ermittelten Abstand statistisch beeinflussen.

Zumindest ein Teil der ersten Übertragungsstrecke verläuft bevorzugt im Freiraum, insbesondere in der Umgebung eines Kraftfahrzeugs, und aus den statistischen Eigenschaften von ermittelten Abstandswerten kann auf das Vorhandensein von Aerosolen wie z.B. Nebel in dem Freiraum geschlossen werden. Ein System zur Ausführung des erfindungsgemäßen Verfahrens kann dementsprechend vergleichbar zu an sich bekannten Ultraschall-Abstandssensoren und dergleichen z.B. in einem Stoßfänger des Kraftfahrzeugs integriert sein.

Vorteilhaft können auch Bordsysteme des Kraftfahrzeugs, insbesondere Beleuchtungssysteme und/oder Fahrsicherheitssysteme in Abhängigkeit der statistischen Eigenschaften von ermittelten Abstandswerten angesteuert bzw. betrieben werden.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung beziehungsweise Darstellung in der Beschreibung beziehungsweise in der Zeichnung.

In der Zeichnung zeigt:
- Figur 1: ein Blockschaltbild einer ersten Ausführungsform der erfindungsgemäßen Vorrichtung,
- Figur 2: eine Detailansicht der Vorrichtung aus Figur 1,
- Figur 3a: einen Zeitverlauf eines erfindungsgemäß erhaltenen Empfangssignals,
- Figur 3b bis Figur 3d: jeweils einen schematischen Zeitverlauf von rechteckförmigen Sendesignalen und einem entsprechenden Empfangssignal,
- Figur 4: ein erstes Szenario, bei dem das erfindungsgemäße Verfahren zur Abstandsmessung verwendet wird,
- Figur 5: ein weiteres Szenario, bei dem das erfindungsgemäße Verfahren verwendet wird,
- Figur 6: eine Ausführungsform einer erfindungsgemäßen Signalerzeugungseinheit,
- Figur 7: optische Komponenten einer Ausführungsform der erfindungsgemäßen Vorrichtung,
- Figur 8: eine erfindungsgemäße Ansteuerschaltung zur Erzeugung eines optischen Signals,
- Figur 9: eine erfindungsgemäße Phasenschieber-Schaltung,
- Figur 10: eine Ausführungsform der Erfindung mit mehreren Übertragungsstrecken,
- Figur 11: einen zeitlichen Verlauf von für die Ausführungsform gemäß Figur 10 verwendeten Rechtecksignalen,
- Figur 12: eine schematische Darstellung einer erfindungsgemäßen Optik einschließlich einer Mikrospiegel-Anordnung,
- Figur 13a und 13b: jeweils eine weitere erfindungsgemäße Ausführungsform optischer Komponenten der Vorrichtung, und
- Figur 14: eine erfindungsgemäße Drehspiegelanordnung als Bestandteil einer optischen Übertragungsstrecke.

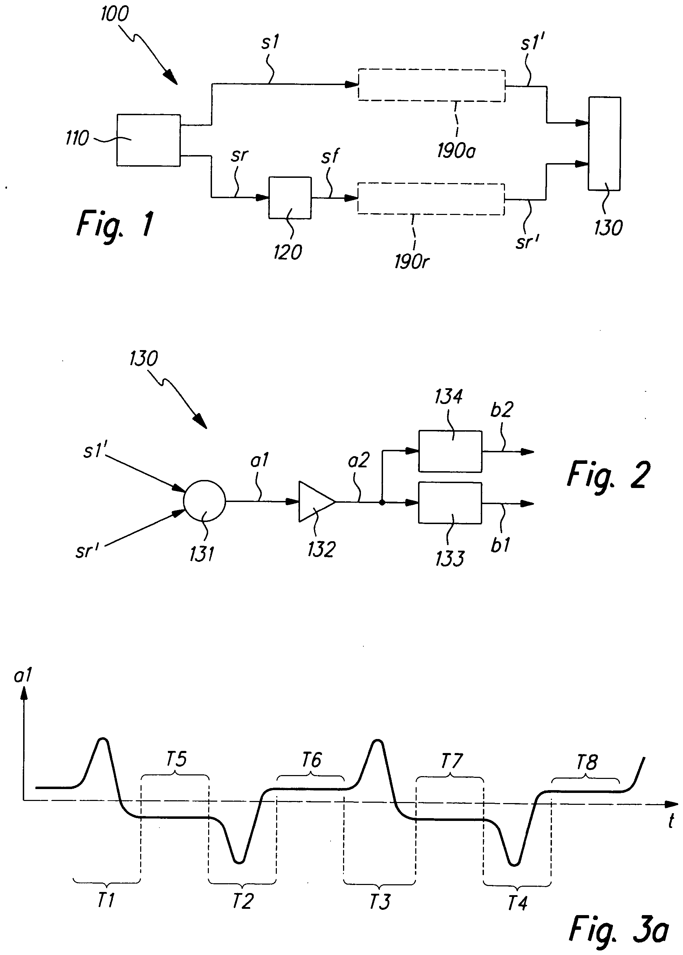

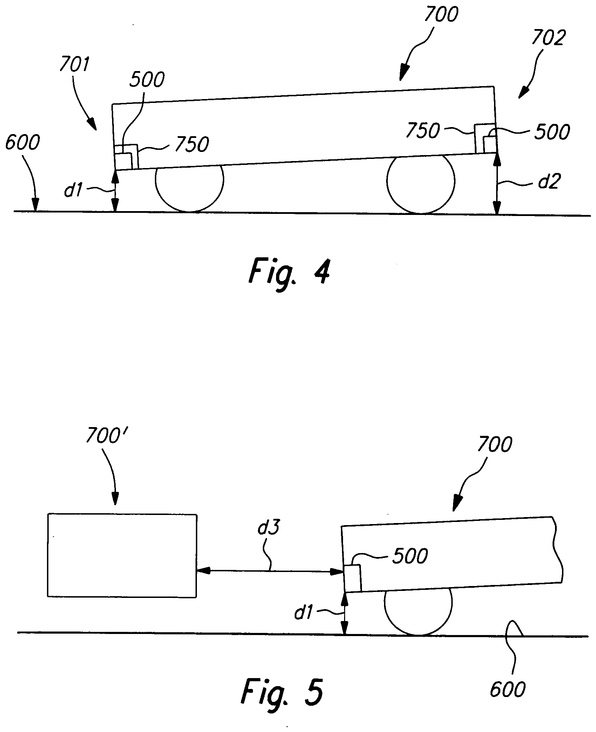

Figur 1 zeigt eine Ausführungsform der erfindungsgemäßen Vorrichtung 100 zur Erfassung einer physikalischen Größe, die vorliegend in der nachfolgend beschriebenen Weise zur Abstandsmessung zwischen einem die Vorrichtung 100 enthaltenden Sensormodul 500 (Figur 4) und einem oder mehreren Objekten 600, 700' (Figur 4, 5) eingesetzt wird.

Insbesondere wird die erfindungsgemäße Vorrichtung 100 zur optischen Abstandsmessung im Bereich eines Kraftfahrzeugs 700 (Figur 4, 5) verwendet.

Die erfindungsgemäße Vorrichtung 100 weist eine Signalerzeugungseinheit 110 auf, die wie abgebildet ein erstes Sendesignal s1 und ein weiteres, auch als Referenzsignal bezeichnetes Signal sr erzeugt. Die Signale s1, sr sind zur Übertragung über ihnen entsprechend zugeordnete Übertragungsstrecken 190a, 190r vorgesehen.

Die erste Übertragungsstrecke 190a weist eine Übertragungsfunktion auf, die von der zu erfassenden physikalischen Größe, d.h. vorliegend von dem zu messenden Abstand zwischen dem Sensormodul 500 und dem Objekt 600, 700', abhängt. Hierzu ist die erste Übertragungsstrecke 190a vorteilhaft zumindest teilweise als optische Freiraum-Übertragungsstrecke ausgebildet, die einen Weg zwischen dem Sensormodul 500 und dem Objekt 600, 700' und wieder zurück umfasst, und das Sendesignal s1 ist ein optisches Signal.

An dem Ausgang der ersten Übertragungsstrecke 190a wird dementsprechend ein erstes Empfangssignal sl' erhalten, dessen Laufzeit durch die erste Übertragungsstrecke 190a von dem Abstand d1, d2, d3 zwischen dem Sensormodul 500 und dem Objekt 600, 700' abhängt.

Die zweite Übertragungsstrecke 190r ist als Referenzübertragungsstrecke vorgesehen und weist entsprechend eine bekannte Übertragungsfunktion auf, die insbesondere nicht von der zu erfassenden physikalischen Größe, d.h. vorliegend von dem zu messenden Abstand d1, d2, d3 zwischen dem Sensormodul 500 und dem Objekt 600, 700', abhängt. Die Referenzübertragungsstrecke 190r kann erfindungsgemäß ebenfalls als optische Übertragungsstrecke ausgebildet sein; in diesem Fall ist das Referenzsignal sr auch ein optisches Signal. Alternativ kann die Referenzübertragungsstrecke 190r jedoch auch z.B. rein elektronisch realisiert werden, wobei als Referenzsignal sr dementsprechend ein elektronisches Signal verwendet wird.

An dem Ausgang der Referenzübertragungsstrecke 190r wird ein Referenzempfangssignal sr' erhalten, das aufgrund der bekannten Übertragungsfunktion der Referenzübertragungsstrecke 190r z.B. auch direkt aus dieser und dem Referenzsignal sr ermittelt werden könnte.

In dem die Referenzübertragungsstrecke 190r aufweisenden Referenzzweig der erfindungsgemäßen Vorrichtung 100 sind zusätzlich vorzugsweise aktiv ausgebildete Filtermittel 120 vorgesehen, die eine Amplitude und/oder Phasenlage des Referenzsignals sr bezüglich des Sendesignals s1 beeinflussen können, wodurch an einem Ausgang der Filtermittel 120 ein gefiltertes Referenzsignal sf erhalten wird, das anstelle des ungefilterten Referenzsignals sr der Referenzübertragungsstrecke 190r zugeführt wird.

Bevorzugt weisen das Sendesignal s1 und das Referenzsignal sr bzw. das gefilterte Referenzsignal sf eine rechteckförmige Signalform auf, und die Signale s1, sr besitzen eine Phasenverschiebung von 180 Grad, so dass sie sich bei gleichen Amplituden zu einem Gleichsignal ergänzen würden.

Das erste Sendesignal s1 wird in der ersten Übertragungsstrecke 190a jedoch in Abhängigkeit der zu erfassenden physikalischen Größe beeinflusst, insbesondere hinsichtlich seiner Amplitude und/oder seiner Phasenlage bezogen auf das Referenzsignal sr. Demnach enthalten die ausgangsseitig der Übertragungsstrecken 190a, 190r empfangenen Signale s1', sr' Informationen über die auszuwertende physikalische Größe.

Das erfindungsgemäße Verfahren sieht bei dem in Figur 4 schematisch dargestellten Kraftfahrzeug 700 Abstandsmessungen in mindestens zwei Bereichen 701, 702 vor, bei denen es sich bevorzugt um einen Frontbereich 701 und einen Heckbereich 702 handelt. Hierzu weisen die Stoßfänger 750 des Kraftfahrzeugs jeweils mindestens ein Modul 500 auf, das eine erfindungsgemäße Vorrichtung 100 (Figur 1) zur Abstandsmessung beinhaltet.

Erfindungsgemäß wird vorteilhaft ein Abstand d1, d2 des jeweiligen Bereichs 701, 702 des Kraftfahrzeugs 700 bzw. seiner Karosserie von der Straßenoberfläche 600 gemessen, so dass aus den erfassten Abstandswerten d1, d2 Informationen über eine Nickbewegung des Kraftfahrzeugs 700 ableitbar sind.

Zur Abstandsmessung bei dem in Figur 4 abgebildeten Szenario ist dementsprechend vorgesehen, dass die Freiraum-Übertragungsstrecke 190a (Figur 1) zwischen dem die erfindungsgemäße Vorrichtung 100 enthaltenden Sensormodul 500 und der Straßenoberfläche 600 verläuft, so dass das erste Sendesignal s1 (Figur 1) von dem Sensormodul 500 ausgesandt wird und ein entsprechend an der Straßenoberfläche 600 reflektiertes Signal als erstes Empfangssignal sl' (Figur 1) an dem Ausgang der Übertragungsstrecke 190a erhalten wird. Aufgrund des Abstands d1 zwischen dem Sensormodul 500 und der Straßenoberfläche 600 ergibt sich u.a. eine Dämpfung des ersten Empfangssignals sl' und eine Phasenverschiebung zu dem Referenzempfangssignal sr', das z.B. einen kürzeren, bekannten Signalweg, vgl. die Referenzübertragungsstrecke 190r, durchläuft.

Die Messung des Abstands d2 in dem Heckbereich 702 des Kraftfahrzeugs erfolgt analog zu der Messung des Abstands d1.

Die Auswertung der ausgangsseitig der Übertragungsstrecken 190a, 190r (Figur 1) erhaltenen Empfangssignale s1', sr' erfolgt in einer Auswerteeinheit 130, deren Funktion nachstehend unter Bezugnahme auf Figur 2 beschrieben ist.

Die Auswerteeinheit 130 weist eingangsseitig eine Addiereinheit 131 auf, der die Empfangssignale s1', sr' der beiden Übertragungsstrecken 190a, 190r zugeführt werden. An dem Ausgang der Addiereinheit 131 ergibt sich demzufolge ein Summensignal a1, das - bei identisch ausgebildeten Übertragungsstrecken 190a, 190r - aufgrund der erfindungsgemäßen Auswahl der Signale s1, sr einem Gleichsignal entspräche. Tatsächlich wird aufgrund der üblicherweise voneinander verschiedenen Übertragungsfunktionen der Übertragungsstrecken 190a, 190r ein von einem Gleichsignal abweichendes Summensignal a1 erhalten, das z.B. den in Figur 3a abgebildeten zeitlichen Verlauf aufweist.

Die Funktion der Addiereinheit 131 (Figur 2) wird vorliegend durch eine einzige, nicht abgebildete Fotodiode realisiert, die gleichzeitig vorteilhaft eine Umwandlung der optischen Empfangssignale s1', sr' in entsprechende elektrische Signale vornimmt. Der durch die Fotodiode in Reaktion auf die ihr zugeführten optischen Empfangssignale s1', sr' erhaltene Fotostrom entspricht demnach dem vorstehend beschriebenen Summensignal a1 (Figur 2).

In den in Figur 3a durch geschweifte Klammern markierten Zeitbereichen T1, T2, T3, T4 des Summensignals a1 sind deutlich Impulse erkennbar, die sich durch Laufzeiteffekte des Sendesignals s1 in der ersten Übertragungsstrecke 190a und der damit einhergehenden Phasenverschiebung ergeben. Die Phasenverschiebung ist proportional zu dem Abstand d1, d2 (Figur 4) zwischen dem Sensormodul 500 und der Straßenoberfläche 600, so dass aus der Phasenverschiebung auf den Abstand d1, d2 geschlossen werden kann.

Das Summensignal a1 wird neben einer geeigneten Verstärkung durch den der Fotodiode 131 nachgeordneten Verstärker 132 (Figur 2) bevorzugt nur in den Zeitbereichen T1, T2, T3, T4 ausgewertet, um Informationen über die Phasendifferenz zu erhalten, weil insbesondere diese Zeitbereiche T1, T2, T3, T4 bei den verwendeten rechteckförmigen Sendesignalen s1, sr die interessierende Information bezüglich der Phasendifferenz aufweisen.

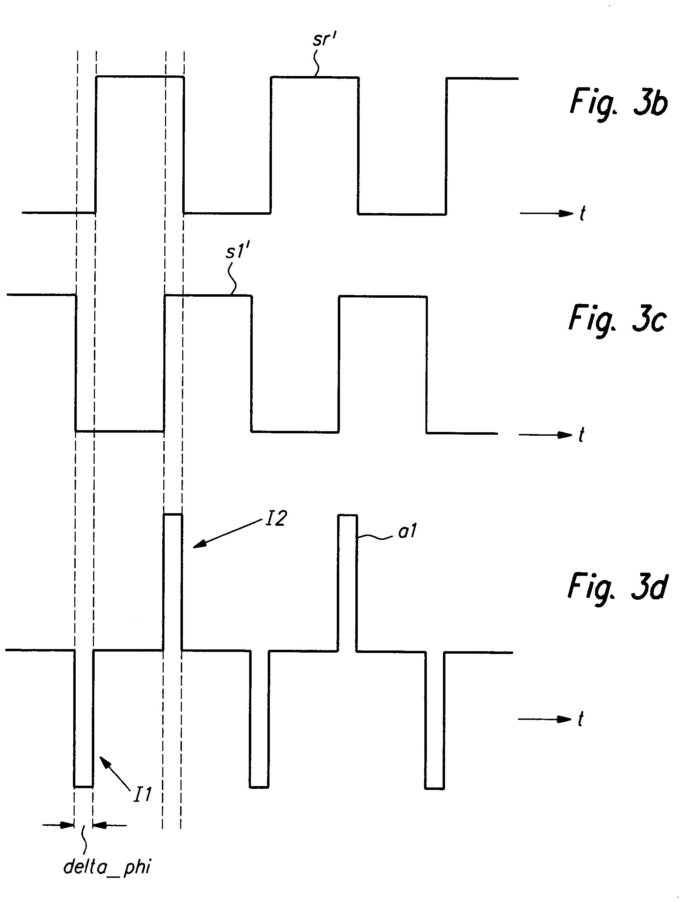

Die Figuren 3b bis 3c zeigen hierzu jeweils schematisch zwei rechteckförmige Signale, wobei in Figur 3b z.B. das an dem Ausgang der Referenzübertragungsstrecke 190r (Figur 1) erhaltene Referenzempfangssignal sr' und in Figur 3c das an dem Ausgang der Übertragungsstrecke 190a (Figur 1) erhaltene Empfangssignal sl' abgebildet ist. Die Amplituden der betrachteten Signale sr, s1 interessieren vorliegend nicht und werden daher als gleich groß angenommen. Dementsprechend kompensieren sich die beiden Signale sr', sl' nahezu zu einem zeitlich konstanten Summensignal a1, vgl. Figur 3d, wobei sich jedoch aufgrund der Laufzeitunterschiede der Signale s1, sr in den unterschiedlichen Übertragungsstrecken 190a, 190r die in Figur 3d mit den Bezugszeichen I1, I2, .. angedeuteten Impulse ergeben, deren Breite von der laufzeitbedingten Phasendifferenz delta_phi der Signale sr, s1 bzw. s1', sr' abhängt.

Verschiedene, dem Fachmann bekannte Effekte wie z.B. ein Tiefpassverhalten beteiligter Komponenten führen sowohl innerhalb der Übertragungsstrecken 190a, 190r als auch z.B. in der Fotodiode 131 und dem Verstärker 132 zu einem "Verschleifen" der in den Figuren 3b bis 3d dargestellten idealen Rechtecksignale, so dass sich für die Impulse I1, I2, .. bei einem realen System die in Figur 3a in den Zeitbereichen T1, T2, .. angegebene Signalform ergibt.

Aufgrund der großen Lichtgeschwindigkeit kann die Impulsbreite der entsprechenden Impulse bei geringen Abständen d1, d2 von z.B. wenigen Dezimetern oder weniger Werte im Nanosekundenbereich annehmen.

Um eine entsprechend schnelle Auswertung und eine dementsprechend erforderliche Verwendung hinreichend schneller Bauelemente in der Vorrichtung 100 bzw. in der Auswerteeinheit 130 zu vermeiden, kann die Auswertung des Summensignals a1 erfindungsgemäß bevorzugt dadurch erfolgen, dass mehrere Impulse aus aufeinanderfolgenden Zeitbereichen T1, T2, T3, T4 (Figur 3a) integriert bzw. addiert werden, was bevorzugt durch analoge Schaltungskomponenten erfolgen kann. Das entsprechend erhaltene integrierte Signal ist Untersuchungen der Anmelderin zufolge bei einer Auswertung z.B. einiger zehn Impulse - trotz verhältnismäßig kleiner Phasendifferenzen aufgrund der hohen Lichtgeschwindigkeit - durch herkömmliche CMOS-Auswerteschaltungen, vgl. die Elemente 133, 134, auswertbar.

D.h., das erfindungsgemäße Verfahren ermöglicht die Auswertung von Lichtlaufzeiten des ersten Sendesignals s1 mit wenig aufwändigen Schaltungen und bei einer Präzision, die eine Abstandsmessung im Bereich zwischen etwa einigen Zentimetern und etwa mehreren zehn Metern zulässt.

Analog zu der Auswertung der Phaseninformationen kann die Auswertung der Amplituden der empfangenen Signale s1', sr' bzw. des daraus gebildeten Summensignals a1 z.B. nur in vorgebbaren Zeitbereichen T5, T6, T7, T8 (Figur 3a) erfolgen. Das Sendesignal s1 unterliegt aufgrund seines üblicherweise größeren Signalwegs von dem Sensormodul 500 (Figur 4) zu der Straßenoberfläche 600 einer stärkeren Dämpfung als das Referenzsignal sr; diese unterschiedliche Dämpfung stellt sich in einer Abweichung des Summensignals a1 von einer Referenzamplitude (gestrichelte Zeitachse t in Figur 3a) dar und wird in den Zeitbereichen T5, T6, T7, T8, z.B. mittels Integration über mehrere Zeitbereiche T5, T6, T7, T8 ausgewertet. Analog zu der vorstehend beschriebenen Auswertung der Phasendifferenz kann die Empfindlichkeit der erfindungsgemäßen Auswertung auch hinsichtlich der Amplitudendifferenz durch die Integration entsprechender Zeitbereiche T5, T6, .. des Summensignals a1 gesteigert werden.

Die vorstehend beschriebene Auswertung des Summensignals a1 erfolgt bevorzugt in den Funktionsblöcken 133, 134, denen eingangsseitig entsprechend das verstärkte Summensignal a2 zugeführt wird. An den Ausgängen der Funktionsblöcke 133, 134 stehen die Phasen- bzw. Amplitudendifferenz der empfangenen Signale s1', sr' repräsentierende Signale b1, b2 bereit.

Unter Verwendung dieser Signale b1, b2 können die das Referenzsignal sr beeinflussenden Filtermittel 120 (Figur 1) so angepasst werden, dass sich die empfangenen Signale s1', sr' trotz Dämpfung und Laufzeitunterschieden aufgrund der unterschiedlichen Übertragungsstrecken 190a, 190r wieder zu einem Gleichsignal ergänzen, wodurch ein ausgeregelter Zustand erreicht wird.

Da die Signale b1, b2 wie bereits beschrieben Informationen über den Abstand d1 (Figur 4, 5) enthalten, kann aus Ihnen z.B. unter Verwendung entsprechender Kennlinien oder Kennfelder auf den Abstand d1 geschlossen werden. Aus den erfassten Abstandswerten d1, d2 sind vorteilhaft Informationen über eine Nickbewegung des Kraftfahrzeugs 700 ableitbar, die u.a. zur Steuerung eines Fahrdynamiksystems oder auch zur Realisierung einer Niveauregulierung des Kraftfahrzeugs 700 eingesetzt werden können.

Sofern auf jeder Seite des Kraftfahrzeugs 700 mindestens eine erfindungsgemäße Vorrichtung 100 angeordnet ist, können zusätzlich auch Wankbewegungen des Kraftfahrzeugs 700 aus entsprechend ermittelten Abstandswerten abgeleitet werden.

Erfindungsgemäß kann ferner vorgesehen sein, dass aus den Signalen s1', sr' bzw. a1 (Figur 2) auf eine Reflektivität der Straßenoberfläche 600 und damit auf die Reibungsverhältnisse geschlossen wird. Insbesondere sind hierdurch verschneite oder vereiste Abschnitte der Straßenoberfläche 600 erkennbar, wodurch ein Fahrdynamiksystem den erkannten Straßenverhältnissen entsprechend angesteuert werden kann.

Durch die erfindungsgemäße Analyse der Reflektivität der Straßenoberfläche 600 können anhand charakteristischer Reflexionsmuster auch Fahrbahnmarkierungen erkannt werden, so dass eine Fahrspurerkennung bzw. eine Überwachung des Einhaltens der Fahrspuren unter Verwendung der erfindungsgemäßen Vorrichtung 100 möglich ist.

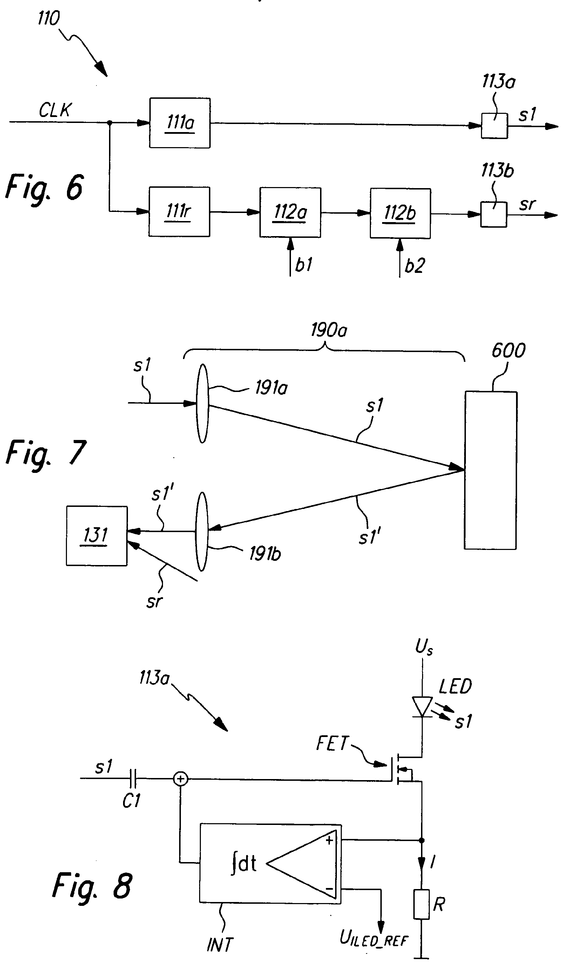

Die über die Übertragungsstrecken 190a, 190r (Figur 1) zu übertragenden Signale s1, sr werden vorteilhaft in Abhängigkeit eines zentralen Taktsignals CLK der Vorrichtung 100 gebildet, das hierzu entsprechenden Signalgeneratoren 111a, 111r der in Figur 6 abgebildeten Ausführungsform der Signalerzeugungseinheit 110 zugeführt ist.

Bei dem Taktsignal CLK kann es sich bevorzugt beispielsweise um ein Rechtecksignal mit einer Taktfrequenz von etwa 100 kHz handeln, und die Signalgeneratoren 111a, 111r können als Treiberbausteine ausgebildet sein, wobei der Signalgenerator 111r eine Invertierung des Taktsignals CLK vorsieht, um die erwünschte Phasenverschiebung des Referenzsignals sr von 180° zu dem ersten Sendesignal s1 zu erzielen.

Anstelle der in Figur 1 außerhalb der Signalerzeugungseinheit 110 angeordneten Filtermittel 120 können vorteilhaft auch in die Signalerzeugungseinheit 110 integrierte Filtermittel vorgesehen sein, die gemäß Figur 6 einen Phasenschieber 112a und einen steuerbaren Verstärker 112b umfassen.

Dem Phasenschieber 112a ist beispielsweise das die Phasendifferenz der empfangenen Signale s1', sr' repräsentierende Signal b1 (vgl. Figur 2) zugeführt, um die vorstehend beschriebene Phasenregelung mit dem Ziel der Erreichung eines Gleichsignals für das Summensignal a1 (Figur 2, 3a) auszuführen.

Analog hierzu ist dem steuerbaren Verstärker 112b das die Amplitudendifferenz der empfangenen Signale s1', sr' repräsentierende Signal b2 zugeführt, um die vorstehend beschriebene Amplitudenregelung - ebenfalls mit dem Ziel der Erreichung eines Gleichsignals für das Summensignal a1 (Figur 2, 3a) - auszuführen.

Die Funktionsblöcke 113a, 113b symbolisieren Ansteuerschaltungen einschließlich entsprechender elektrooptischer Wandler wie z.B. Leuchtdioden, an deren Ausgängen das betreffende optische Signal s1, sr zur Übertragung über die jeweilige Übertragungsstrecke 190a, 190r (Figur 1) verfügbar ist.

Die als Freiraum-Übertragungsstrecke ausgebildete erste Übertragungsstrecke 190a umfasst bevorzugt eine in Figur 7 schematisch durch bikonvexe Linsen 191a, 191b dargestellte Sende- und Empfangsoptik zur Abbildung des Signals s1 auf das Objekt 600, z.B. die Straßenoberfläche (Figur 4, 5), bzw. zur Abbildung eines an dem Objekt 600 reflektierten, empfangenen Signals sl' auf die Fotodiode 131.

Die Referenz-Übertragungsstrecke 190r (Figur 1) kann bevorzugt so ausgebildet sein, dass eine das Referenzsignal sr abgebende Leuchtdiode direkt in die Fotodiode 131 strahlt.

Die in Figur 6 abgebildeten Ansteuerschaltungen 113a, 113b besitzen einer vorteilhaften Ausführungsform zufolge die in Figur 8 abgebildete Struktur, wonach beispielhaft der Ansteuerschaltung 113a eingangsseitig ein Wechselanteil des Sendesignals s1 bzw. eines dem Sendesignal s1 entsprechenden elektrischen Signals über einen Koppelkondensator C1 zuführbar ist. Der Maximalstrom für den als Leuchtdiode ausgebildeten elektrooptischen Wandler LED ist durch die Wahl des Ohmwiderstands R festgelegt, der gleichzeitig auch als Shunt zur Messung des durch die Leuchtdiode LED fließenden Stroms I dient.

Der erfindungsgemäß ebenfalls in der Ansteuerschaltung 113a vorgesehene Integrierer INT erfasst den durch die Leuchtdiode LED fließenden Strom I und regelt diesen über den Feldeffekttransistor FET auf einen konstanten Mittelwert, um zu verhindern, dass sich Temperaturschwankungen der Leuchtdiode LED aufgrund unterschiedlicher Eigenerwärmung ergeben, wodurch eine besonders hohe Präzision bei der Erzeugung des optischen Signals s1 erzielt wird.

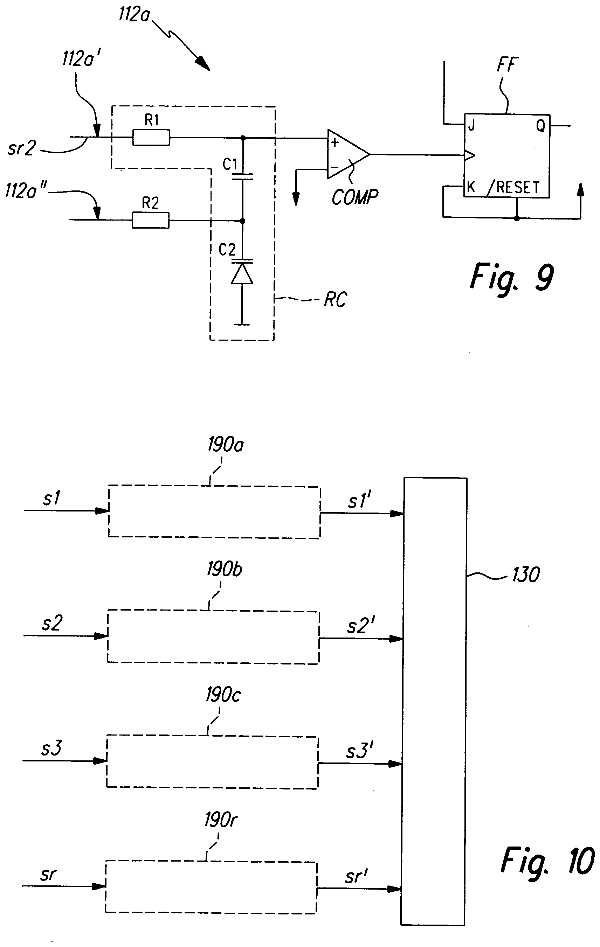

Eine besonders bevorzugte Ausführungsform für den in der Signalerzeugungseinheit 110 (Figur 1) enthaltenen Phasenschieber 112a ist nachfolgend unter Bezugnahme auf Figur 9 beschrieben.

Der Phasenschieber 112a ist dazu vorgesehen, ein ihm eingangsseitig zugeführtes Rechtecksignal, bei dem es sich beispielsweise um das Referenzsignal sr (Figur 1) bzw. eine entsprechende Vorstufe sr2 handeln kann, um einen vorgebbaren Phasenwinkel zu verzögern.

Hierzu weist der Phasenschieber 112a an seinem Eingang 112a' eine RC-Kombination RC auf, die eine steuerbare Zeitkonstante realisieren kann. Vorliegend ist die RC-Kombination RC hierzu aus dem Ohmwiderstand R1 und zwei kapazitiven Elementen C1, C2 gebildet, wobei das erste kapazitive Element C1 ein Kondensator ist und wobei das zweite kapazitive Element C2 eine Kapazitätsdiode C2 ist. Bei der vorliegenden Konfiguration kann die Zeitkonstante der RC-Kombination RC durch Änderung einer Steuerspannung beeinflusst werden, die der Kapazitätsdiode C2 über den Anschluss 112a'' und den Ohmwiderstand R2 zuführbar ist. Vorteilhaft kann dem Anschluss 112a" ein von dem Signal b1 (vgl. Figur 2) abhängiges Signal oder auch direkt das Signal b1 zugeführt werden, so dass die mittels der Auswerteeinheit 130 erhaltene Information über die Phasenverschiebung der Signale s1', sr' direkt zur Steuerung des Phasenschiebers 112a nutzbar ist.

Das durch die RC-Kombination RC verzögerte Signal wird durch den nachgeschalteten Komparator COMP, dem an einem Eingang ferner eine vorgebbare Referenzspannung zugeführt ist, schließlich wieder in ein Rechtecksignal umgewandelt.

Bevorzugt wird dem Phasenschieber 112a an seinem Eingang ein Rechtecksignal sr2 zugeführt, das die doppelte Frequenz des Referenzsignals sr aufweist. Auf diese Weise erhält der Phasenschieber 112a und insbesondere auch der Komparator COMP dementsprechend nur steigende Flanken des Rechtecksignals mit der für das Referenzsignal sr vorgesehenen Frequenz, wodurch Verzerrungen bei der Bildung des auszugebenden Rechtecksignals in dem Komparator COMP aufgrund von Hystereseeffekten vermieden werden. Derartige Verzerrungen würden u.a. eine unterschiedliche Verzögerung steigender Flanken und fallender Flanken des verarbeiteten Signals bewirken und demnach die Stellgenauigkeit des Phasenschiebers 112a erheblich beeinträchtigen, was sich negativ auf die Empfindlichkeit der Vorrichtung 100 auswirkt. Durch die erfindungsgemäße Verwendung eines Rechtecksignals sr2 mit der doppelten Frequenz ist sichergestellt, dass z.B. alle steigenden Flanken dieselbe Verzögerung, d.h. Phasenverschiebung, erfahren. Ein dem Komparator COMP nachgeordneter Frequenzteiler FF, der vorliegend als JK-FlipFlop ausgebildet ist, setzt das verzögerte Signal wieder auf die für das Referenzsignal sr erwünschte Frequenz herunter, wodurch an dem Ausgang Q des JK-Flip-Flops FF ein Rechtecksignal mit der erforderlichen Frequenz und der vorgegebenen Phasenverschiebung erhalten wird. Zur Synchronisation mit dem Taktsignal CLK (Figur 6) des gesamten Systems kann der J-Eingang des JK-Flip-Flops FF in geeigneter, dem Fachmann bekannter Weise, mit einem weiteren Steuersignal beaufschlagt werden, das vorzugsweise direkt aus dem Taktsignal CLK abgeleitet ist.

Anstelle der Kapazitätsdiode C2 kann dem Phasenschieber 112a auch eine steuerbare Matrix aus Ohmwiderständen bzw. Kondensatoren (CDAC) zugeordnet sein, die unter digitaler Ansteuerung die Einstellung verschiedener Zeitkonstanten für die RC-Kombination ermöglicht, indem, beispielsweise mittels Analogschaltern usw., unterschiedliche Schaltungskonfigurationen hergestellt werden. Zur Realisierung eines möglichst großen Stellbereichs für die Zeitverzögerung sind die Bauteilwerte für die einzelnen Ohmwiderstände bzw. Kondensatoren vorzugsweise binär abzustufen. Die Ansteuerung der Matrix kann vorteilhaft direkt über eine Recheneinheit, z.B. einen Mikrocontroller oder digitalen Signalprozessor (DSP) erfolgen, die auch die Auswertung der Signale b1, b2 sowie die Steuerung der weiteren Komponenten der Vorrichtung 100 durchführt.

Anstelle rechteckförmiger Signale s1, sr können auch sinusförmige Signale oder sonstige vorzugsweise periodische Signale zur Übertragung über die Übertragungsstrecken 190a, 190r verwendet werden, die sich in einem ausgeregelten Zustand zu einem Gleichsignal ergänzen können, was eine einfache Erkennung des ausgeregelten Zustands ermöglicht. In diesem ausgeregelten Zustand sind die Informationen über den zu ermittelnden Abstand d1, d2, d3 (Figur 4, 5) direkt in den Größen b1, b2 (Figur 2) enthalten.

Es ist ferner denkbar, dass solche Signale zur Übertragung über die Übertragungsstrecken 190a, 190r verwendet werden, die sich - in einem ausgeregelten Zustand - nicht zu einem Gleichsignal ergänzen. Zur erfolgreichen Durchführung des erfindungsgemäßen Verfahrens ist es ausreichend, wenn die empfangenen Signale bzw. ein hieraus abgeleitetes Signal wie z.B. das Summensignal a1 (Figur 2) eine bestimmte Signalform aufweisen, die den ausgeregelten Zustand möglichst einfach erkennen lassen. In diesem Fall ist bereits die Gewinnung von Informationen über Laufzeit- bzw. Phasendifferenzen und damit z.B. die Abstandsmessung möglich.

Bevorzugt sind die Signale s1, sr jedoch so gewählt, dass eine Empfindlichkeit der Abweichung gegenüber der bestimmten Signalform, die den ausgeregelten Zustand kennzeichnet, in Abhängigkeit der Laufzeitunterschiede bzw. Dämpfung möglichst groß ist, um die Auflösung des erfindungsgemäßen Messverfahrens zu maximieren. Derartige Signalformen sind bereits unter Bezugnahme auf die Figuren 3b bis 3d beschrieben worden. Bei den beschriebenen, zueinander inversen Rechtecksignalen genügt bereits eine minimale Phasendifferenz, um einen Impuls I1, I2 mit verhältnismäßig großer Amplitude zu erzeugen.

Bei der Verwendung von rechteckförmigen Signalen s1, sr können diese vorteilhaft direkt aus einem Rechtecksignal CLK (Figur 6) eines Oszillators abgeleitet werden, der beispielsweise den Referenztakt für die Vorrichtung 100 erzeugt.

Alternativ hierzu ist die Erzeugung der Signale s1, sr vorteilhaft auch durch direkte digitale Synthese (DDS) möglich, bei der z.B. ein in einem Speicher abgelegter Signalverlauf zur Erzeugung der Signale s1, sr mittels eines Digital-Analog-Wandlers verwendet wird. Durch Verwendung des DDS-Prinzips können beliebige Kurvenformen gebildet werden.

Bei einer weiteren sehr vorteilhaften Ausführungsform der vorliegenden Erfindung ist vorgesehen, mehrere Übertragungsstrecken zu verwenden, vgl. Figur 10. Anstelle einer einzigen Freiraum-Übertragungsstrecke 190a, wie sie bei der Ausführungsform gemäß Figur 1 vorgesehen ist, weist die vorliegende Ausführungsform der erfindungsgemäßen Vorrichtung 100 wie aus Figur 10 ersichtlich zusätzlich zu der Referenz-Übertragungsstrecke 190r drei Übertragungsstrecken 190a, 190b, 190c auf, die vorzugsweise alle als Freiraum-Übertragungsstrecken ausgebildet sind.

Die den unterschiedlichen Übertragungsstrecken 190a, 190b, 190c zugeführten Signale s1, s2, s3 können einer ersten - auf Rechtecksignalen basierenden - Erfindungsvariante zufolge jeweils als Rechtecksignal ausgebildet sein, wobei das betreffende Signal s1, s2, s3 jeweils eine Phasenverschiebung von 180° zu dem ebenfalls als Rechtecksignal ausgebildeten Referenzsignal sr aufweist. Alternativ können neben Rechtecksignalen auch die vorstehend beschriebenen weiteren Signalformen verwendet werden, die die erfindungsgemäße Auswertung durch die Auswerteeinheit 130 ermöglichen.

Die in Figur 10 abgebildete Konfiguration kann beispielsweise derart betrieben werden, dass zeitlich aufeinanderfolgend jeweils nur eine der drei Übertragungsstrecken 190a, 190b, 190c zusammen mit der Referenz-Übertragungsstrecke 190r verwendet wird, wobei sich für die Auswertung die bereits beschriebene Verfahrensweise ergibt.

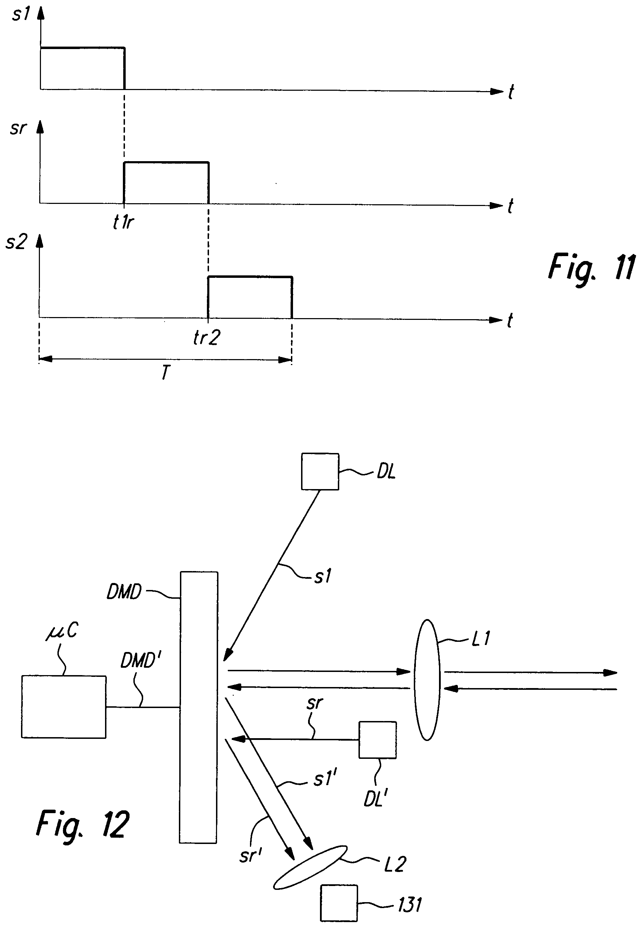

Es ist darüberhinaus auch denkbar, mehr als eine der drei Übertragungsstrecken 190a, 190b, 190c, z.B. die Übertragungsstrecken 190a, 190b, gleichzeitig zusammen mit der Referenz-Übertragungsstrecke 190r zu verwenden. In diesem Fall kann beispielsweise vorgesehen sein, dass die Signale s1, s2, sr wiederum Rechteckform aufweisen, vgl. Figur 11, wobei jedes Signal s1, s2, sr allerdings nicht für die halbe Periodendauer T, d.h. für 180°, sondern nur für ein Drittel der Periodendauer, d.h. für 120°, einen von Null verschiedenen Amplitudenwert aufweist. Bei einer geeigneten Phasenverschiebung der Signale s1, s2, sr von jeweils 120° zueinander, können sich die sich ergebenden Empfangssignale s1', s2', sr' an den Ausgängen der Übertragungsstrecken 190a, 190b, 190r vorteilhaft - in dem ausgeregelten Zustand - wieder zu einem Gleichsignal überlagern.

Bei der vorstehend beschriebenen gleichzeitigen Verwendung mehrerer nicht als Referenz-Übertragungsstrecke 190r ausgelegter Übertragungsstrecken 190a, 190b ist vorteilhaft jeder Übertragungsstrecke 190a, 190b ein eigener Phasenschieber und ein eigener Verstärker zugeordnet, um die entsprechenden Signale s1, s2 gegenüber dem vorzugsweise nicht derartig beeinflussten Referenzsignal sr hinsichtlich ihrer Phase bzw. Amplitude zu verändern.

Eine Auswertung einer sich aufgrund von Laufzeiteffekten des Signals s1 ergebenden Überlappung zwischen dem empfangenen Signal s1' und dem empfangenen Referenzsignal sr' kann zu dem in Figur 11 angedeuteten Zeitpunkt t1r vorgenommen werden, während eine vergleichbare Auswertung für das empfangene Signal s2' zu dem Zeitpunkt tr2 stattfindet.

Durch die vorstehend beschriebene Variante des erfindungsgemäßen Verfahrens können unter Verwendung eines einzigen Referenzsignals sr vorteilhaft gleich zwei oder mehr Übertragungsstrecken 190a, 190b zur Abstandsmessung genutzt werden, so dass bei entsprechender Auslegung der Freiraum-Übertragungsstrecken z.B. sich in unterschiedliche Raumrichtungen erstreckende Abstände erfasst werden können.

Bei mehr als zwei gleichzeitig eingesetzten Referenzsignalen sr können zur Auswertung vorteilhaft die Überlappungen eines ersten Signals s1 mit dem Referenzsignal sr zu einer Überlappung eines weiteren Signals s3 mit dem ersten Signal s1 oder dergleichen in Beziehung gesetzt werden. Zur Steigerung der Präzision können jedoch auch mehrere Referenzsignale erzeugt und verwendet werden, deren nichtverschwindende Signalwerte bevorzugt zeitlich zwischen den nichtverschwindenden Signalwerten von Nicht-Referenzsignalen s1, s2, s3 angeordnet werden, so dass sich die zu analysierenden laufzeitbedingten Überlappungen jeweils zwischen einem Nicht-Referenzsignal s1, s2, s3 und einem Referenzsignal sr ergeben.

Der Prozess des Ausregelns durch Anpassung der Phasenverschiebungen bzw. Amplituden der Signale s1, s2, s3, sr kann als mehrdimensionaler Optimierungsprozess aufgefasst werden, bei dem bevorzugt zunächst die Ausregelung der Amplituden erfolgt, um die Empfindlichkeit bei einer sich anschließenden Ausregelung der Phasenverschiebungen zu steigern.

Alternativ hierzu ist es jedoch auch denkbar, zunächst die Phasenverschiebung zwischen einem Signal s1 und dem Referenzsignal sr auszuregeln, was z.B. dadurch erfolgen kann, dass die Fläche der sich in den Zeitbereichen T1, T2, .. (Figur 3a) ergebenden Impulse (vgl. auch I1, I2 aus Figur 3d), d.h. das entsprechende Zeitintegral über dem Summensignal a1 (Figur 2) in den betreffenden Zeitbereichen, durch eine entsprechende Phasenverschiebung des Signals s1 oder sr minimiert wird.

Der aufgrund von Amplitudenunterschieden zwischen den empfangenen Signalen s1', sr' in den Zeitbereichen T1, T2, .. auftretende Beitrag zu dem Zeitintegral über dem Summensignal a1, der zur Ermittlung der Phasenverschiebung an sich unerwünscht ist, kann vorteilhaft durch eine Auswertung des Summensignals in den Zeitbereichen T5, T6, .. berücksichtigt und entsprechend aus den Integralwerten für die Zeitbereiche T1, T2, .. eliminiert werden.

Neben der Verwendung von Leuchtdioden als elektrooptische Wandler zur Erzeugung optischer Signale sind u.a. auch Laserdioden einsetzbar. Ganz besonders bevorzugt werden oberflächenemittierende Diodenlaser, VCSEL (vertical cavity surface emitting laser) verwendet, die besonders klein bauen und einen verhältnismäßig geringen Strahlquerschnitt aufweisen. Beispielsweise können VCSEL-Diodenlaser des Typs SFH 4020 von OSRAM verwendet werden.

Bei einer weiteren sehr vorteilhaften Ausführungsform der vorliegenden Erfindung ist mindestens eine steuerbare Mikrospiegeleinrichtung in einer der Übertragungsstrecken 190a, 190b, 190c, 190r oder eingangs- bzw. ausgangsseitig hiervon vorgesehen. Dadurch kann vorteilhaft der Strahlengang der betreffenden Übertragungsstrecke 190a, 190b, 190c, 190r beeinflusst werden.

Die erfindungsgemäße Mikrospiegelanordnung weist vorzugsweise mindestens ein Array von steuerbaren Mikrospiegeln auf, insbesondere digital steuerbare Mikrospiegel (DMD, digital micromirror device).

In der Figur 12 ist beispielhaft schematisch eine erfindungsgemäße Konfiguration abgebildet, die eine Mehrzahl von DMD-Einheiten aufweist, welche vorliegend insgesamt durch den Funktionsblock DMD symbolisiert sind.

Die verschiedenen DMD-Einheiten DMD sind Bestandteil einer ersten Übertragungsstrecke 190a (Figur 1), die zwischen einem optischen Sender, z.B. einem VCSEL-Diodenlaser DL, einer in Figur 12 durch eine bikonvexe Linse L1 symbolisierten ersten Optik, einem nicht abgebildeten, zumindest teilweise reflektierenden, Objekt, einer in Figur 12 durch eine bikonvexe Linse L2 symbolisierten zweiten Optik und der Fotodiode 131 verläuft. Über die erste Übertragungsstrecke 190a wird vorliegend ein erstes optisches Signal s1 übertragen, das in der bereits beschriebenen Weise zumindest teilweise an dem Objekt, beispielsweise einer Straßenoberfläche, reflektiert und der Fotodiode 131 als empfangenes Signal sl' zugeführt wird.

Die verschiedenen DMD-Einheiten DMD sind vorteilhaft ferner Bestandteil einer zweiten Übertragungsstrecke, der Referenz-Übertragungsstrecke 190r (Figur 1), die zwischen einem weiteren optischen Sender, z.B. einem VCSEL-Diodenlaser DL', und der zweiten Optik L2 und der Fotodiode 131 verläuft. Über die zweite Übertragungsstrecke 190r wird vorliegend das optische Referenzsignal sr übertragen, das ebenfalls der Fotodiode 131 zugeführt wird, nämlich als empfangenes Referenzsignal sr'.

Anstelle der Diodenlaser DL, DL' kann als optische Signalquelle jeweils z.B. auch eine Leuchtdiode verwendet werden.

Die DMD-Einheiten DMD sind über eine Schnittstelle DMD', bei der es sich beispielsweise um eine serielle Schnittstelle, z.B. eine SPI (serial peripheral interface)-Schnittstelle handeln kann, mit einer sie steuernden Recheneinheit µC, z.B. mit einem Mikrocontroller, verbunden und können bei entsprechender Ansteuerung die Übertragungsstrecken 190a, 190r beeinflussen.

Beispielsweise ist mindestens eine DMD-Einheit so konfiguriert, dass sie das von dem Diodenlaser DL erzeugte optische Signal s1 in Richtung der ersten Optik L1, d.h. auf das Hindernis zu, reflektiert. Mindestens eine weitere DMD-Einheit ist so konfiguriert, dass sie das an dem Hindernis reflektierte und in der Figur 12 von rechts nach links durch die erste Optik L1 tretende optische Signal in Richtung der zweiten Optik L2 und damit auf die Fotodiode 131 reflektiert.

Mindestens noch eine weitere DMD-Einheit reflektiert das von dem Diodenlaser DL' erzeugte optische Referenzsignal sr ebenfalls in Richtung der zweiten Optik L2 und damit auf die Fotodiode 131.

Die erfindungsgemäße Verwendung von DMD-Einheiten ermöglicht bei optischen Übertragungsstrecken einerseits eine flexiblere Anordnung der Komponenten DL, DL', L1, L2, z.B. durch eine Faltung des entsprechenden Strahlengangs, so dass insgesamt sehr klein bauende Vorrichtungen 100 vorgesehen werden können. Darüberhinaus ist es auch möglich, z.B. ein bestimmtes Sendesignal abwechselnd gezielt auf verschiedene Optiken bzw. Objekte 600 oder auf die Fotodiode 131 zu reflektieren und somit unter Verwendung einer einzigen Lichtquelle DL gleichzeitig zwei oder mehr Übertragungsstrecken zu betreiben bzw. einen vorgegebenen Raumbereich abzutasten.

Zu Kalibrierungszwecken kann ferner vorgesehen sein, das von dem Diodenlaser DL stammende Licht s1 direkt auf die Fotodiode 131 umzulenken, usw.

Durch eine entsprechende Ansteuerung von DMD-Einheiten ist es darüberhinaus auch möglich, die reflektierte Lichtmenge zu beeinflussen, wodurch auch eine Dämpfung eines optischen Signals realisierbar ist. Ferner können optische Signale unterschiedlicher Wellenlänge, die z.B. von mehreren nebeneinander angeordneten Lichtquellen stammen, wahlweise z.B. in Richtung des Objekts reflektiert werden.

Besonders vorteilhaft kann die Anordnung der in Figur 12 abgebildeten Komponenten derart erfolgen, dass sowohl das empfangene Signal sl' als auch das empfangene Referenzsignal sr' in exakt denselben Bereich der Fotodiode 131 eingestrahlt werden, vorzugsweise auch unter möglichst demselben Winkel, wodurch die Präzision bei der Erfassung der betreffenden Signale s1', sr' gesteigert wird und nichtlineare Effekte in dem Halbleiterelement der Fotodiode 131 vermieden werden.

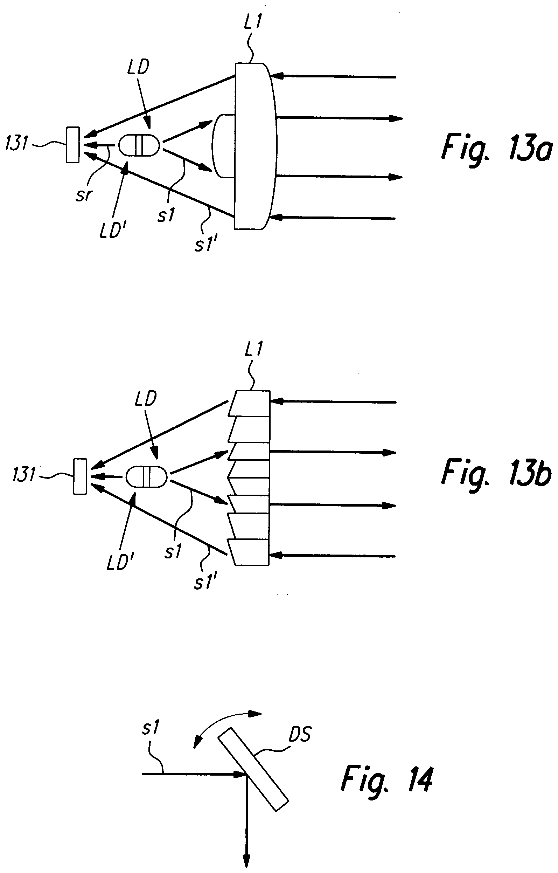

Die Figuren 13a, 13b geben zwei weitere erfindungsgemäße Konfigurationen zur Realisierung von Teilen der optischen Übertragungsstrecken 190a, 190r (Figur 1) an, die ohne DMD-Einheiten arbeiten.

Die in Figur 13a abgebildete Erfindungsvariante sieht als erste Optik L1 ein bifokales Linsensystem vor, das das Signal s1 des Diodenlasers bzw. einer Leuchtdiode LD in Richtung auf ein zu erfassendes Objekt bündelt und gleichzeitig an dem Objekt reflektiertes Licht sl' auf die Fotodiode 131 bündelt. Ein zur Erzeugung des Referenzsignals sr vorgesehener zweiter Diodenlaser bzw. eine Leuchtdiode LD' strahlt das optische Referenzsignal sr direkt in die Fotodiode 131 ein. Im Unterschied zu der in Figur 13a abgebildeten Erfindungsvariante sieht die Anordnung gemäß Figur 13b eine Fresnellinse als erste Optik L1 vor.

Eine weitere sehr vorteilhafte Ausführungsform des erfindungsgemäßen Verfahrens sieht die Verwendung mindestens eines Drehspiegels DS, vergleiche Figur 14, in mindestens einer der optischen Übertragungsstrecken 190a, 190b, 190c, 190r vor, der in Abhängigkeit eines Drehwinkels die Ausdehnung der betreffenden Übertragungsstrecke auf unterschiedliche Raumbereiche ermöglicht. Der Antrieb des Drehspiegels DS erfolgt beispielsweise mittels eines Schrittmotors oder anderer geeigneter, dem Fachmann bekannter Aktoren.

Bei einer weiteren sehr vorteilhaften Ausführungsform der vorliegenden Erfindung kann die Auswertung der empfangenen Signale s1', sr' (Figur 1) durch die Auswerteeinheit 130 eine Frequenzbereichsanalyse umfassen, bei der das verstärkte Summensignal a2 (Figur 2) z.B. allein auf eine Frequenzkomponente hin ausgewertet wird, die der Frequenz der verwendeten Signale s1, sr, entspricht. Da das Summensignal a1 bei dem ausgeregelten Zustand ein Gleichsignal darstellt, kann auf diese Weise wenig aufwändig ermittelt werden, ob der ausgeregelte Zustand erreicht ist.

In Abhängigkeit der Frequenzbereichsanalyse können die Filtermittel 120 (Figur 1) derart angesteuert werden, dass sich schließlich der ausgeregelte Zustand ergibt.

Bei einer anderen sehr vorteilhaften Ausführungsform der vorliegenden Erfindung ist eine im wesentlichen digitale Auswertung der empfangenen Signale s1', sr' durch die Auswerteeinheit 130 vorgesehen. Dementsprechend ist bei dieser Ausführungsform ein hinreichend breitbandiger Verstärker 132 (Figur 2) und ein dem Verstärker 132 nachgeordneter Analog-Digital-Wandler (nicht gezeigt) vorgesehen, der das verstärkte Summensignal a2 in entsprechende Digitalwerte umsetzt. Die Grenzfrequenz des Verstärkers 132 und der Fotodiode 131 sind in Abhängigkeit der gewünschten Empfindlichkeit des Auswerteverfahrens bezüglich der Phasendifferenz zwischen den empfangenen Signalen s1', sr' auszuwählen.

Sofern eine reine Amplitudenregelung durchgeführt werden soll, die eine Abstandsbestimmung in Abhängigkeit der von dem Abstand d1 abhängigen Dämpfung ermöglicht, oder auch eine auf einer Frequenzbereichsanalyse basierende Abstandsermittlung, ist es ausreichend, die Grenzfrequenz der Komponenten 131, 132 so groß zu wählen, dass die sich im nicht ausgeregelten Zustand ergebenden Frequenzanteile des Summensignals a1 digital auswertbar sind.

Eine weitere sehr vorteilhafte Ausführungsform der vorliegenden Erfindung sieht eine Kombination unterschiedlicher Übertragungsstrecken vor, wobei z.B. eine optische und eine akustische Übertragungsstrecke zuzüglich mindestens einer Referenzstrecke verwendet wird. Die akustische Übertragungsstrecke kann z.B. entsprechende Ultraschallwandler aufweisen und die Übertragung von Ultraschallsignalen vorsehen. Die mittels der Ultraschall-Übertragungsstrecke erhaltenen Abstandswerte können vorteilhaft zur Kalibrierung der optischen Übertragungsstrecke verwendet werden. Neben der beschriebenen Kalibrierung können die mittels unterschiedlicher Übertragungsstrecken erhaltenen Abstandswerte auch gegenseitig plausibilisiert werden.

Generell ist es nicht notwendig, dass die Referenz-Übertragungsstrecke 190r optische oder akustische Übertragungswege aufweist. Vielmehr kann die Übertragungsstrecke 190r auch rein elektronisch ausgebildet sein und somit vorteilhaft direkt mit den weiteren elektronischen Komponenten der erfindungsgemäßen Vorrichtung 100 zusammen in ein Gehäuse integriert werden, was eine besonders klein bauende Anordnung ergibt. Ein entsprechendes elektronisches Referenzsignal sr bzw. sr' wird direkt zu einem Photostrom der Fotodiode 131 bzw. einem daraus abgeleiteten, verstärkten Spannungssignal addiert.

Alternativ zu optischen und/oder akustischen Übertragungsstrecken können z.B. auch kapazitive oder induktive Übertragungsstrecken vorgesehen sein, deren Übertragungsfunktion durch die Anwesenheit von Materie bzw. feldverzerrenden Objekten beeinflussbar ist. Entsprechende Phasen- bzw. Amplitudendifferenzen von Signalen s1, s2, die über derartige Übertragungsstrecken übertragen werden, können auf dieselbe Weise mit dem/den Referenzsignalen sr, sr' abgeglichen werden, wie bei den vorstehend beschrieben Ausführungsbeispielen.

Zur Realisierung der kapazitiven bzw. induktiven Übertragungsstrecken können dem Fachmann bekannte Komponenten wie beispielsweise Feldelektroden bzw. Induktionsspulen oder dergleichen verwendet werden.

Die vorstehend beschriebenen DMD-Einheiten DMD (Figur 12) bzw. der Drehspiegel DS (Figur 14) können besonders vorteilhaft dazu eingesetzt werden, eine erste Übertragungsstrecke der in dem Modul 500 (Figur 5) integrierten Vorrichtung 100 in Richtung der Straßenoberfläche 600 zu realisieren, und eine zweite Übertragungsstrecke in Fahrtrichtung des Kraftfahrzeugs 700, d.h. in Figur 5 nach links, auf ein vorausfahrendes Kraftfahrzeug 700'. Entsprechende Abstände d1, d3 können z.B. im Zeitmultiplex erfasst und zur Regelung von Fahrdynamik- und/oder Fahrerassistenzsystemen oder dergleichen verwendet werden, wobei vorteilhaft nur eine einzige Vorrichtung 100 bzw. ein Modul 500 erforderlich ist.

## Patentansprüche

1. Verfahren zur Erfassung eines Abstands, mit den folgenden Schritten:
- Senden mindestens eines ersten optischen Sendesignals (s1) mit einer vorgebbaren ersten Signalform mittels eines Senders über eine erste Übertragungsstrecke (190a), deren Übertragungsfunktion von der zu erfassenden physikalischen Größe, insbesondere des Abstands, abhängt, wobei ein erstes optisches Empfangssignal (s1') an einem Ausgang der ersten Übertragungsstrecke (190a) erhalten wird,
- Senden mindestens eines ersten Referenzsignals (sr) mit einer vorgebbaren Referenzsignalform über eine Referenzübertragungsstrecke (190r), die eine bekannte Übertragungsfunktion aufweist, und wobei ein Referenzempfangssignal (sr') an einem Ausgang der Referenzübertragungsstrecke (190r) erhalten wird,
- Analysieren des ersten Empfangssignals (s1') und des Referenzempfangssignals (sr'), um auf den Abstand als physikalische Größe zu schließen, wobei im Rahmen der Analyse auf den Abstand von dem Sender (500) des ersten Sendesignals (s1) zu einem Objekt (600) geschlossen wird,
wobei die Analyse zur Ermittlung eines der Abstände folgende Schritte aufweist:
- Addieren des Empfangssignals (s1') mit dem Referenzempfangssignal (sr') mittels einer Addiereinheit, um ein Summensignal (a1) zu erhalten, f
- Auswerten vorgebbarer Zeitbereiche des Summensignals (a1), um auf eine Phasenverschiebung des Sendesignals (s1) durch die erste Übertragungsstrecke (190a) zu schließen, f
- Rückschließen auf den Abstand aus der Phasenverschiebung, wobei das erste Referenzsignal (sr) ein optisches Signal ist und die Referenzübertragungsstrecke (190r) als optische Übertragungsstrecke ausgebildet ist und wobei die Addiereinheit durch eine einzige Fotodiode realisiert ist, die gleichzeitig eine Umwandlung der optischen Empfangssignale (s1', sr') in entsprechende elektrische Signale vornimmt,
**dadurch gekennzeichnet, dass** im Rahmen der Analyse der Abstand (d1, d2) eines oder mehrerer Bereiche (701, 702), insbesondere einer Karosserie, eines Kraftfahrzeugs (700) von einer Straßenoberfläche (600) und der Abstand von einem weiteren Objekt, insbesondere einem anderen Kraftfahrzeug (700'), ermittelt wird, wobei abwechselnd die Abstände (d1, d2, d3) zur Straßenoberfläche (600) und zum weiteren Objekt ermittelt werden und wobei die Ermittlung der Abstände auf dem Senden von Sendesignalen von dem einen Sender beruht und wobei die für die Abstandsmessung verwendete Übertragungsstrecke neu ausgerichtet wird.

2. Verfahren nach Anspruch 1, **dadurch gekennzeichnet, dass** als weiterer Schritt zur Analyse das erste Empfangssignal (s1') mit dem Referenzempfangssignal (sr') verglichen wird.

3. Verfahren nach einem der vorstehenden Ansprüche, **dadurch gekennzeichnet, dass** das erste Sendesignal (s1) und das Referenzsignal (sr) jeweils von Null verschiedene Frequenzanteile aufweisen, und dass sich die Zeitfunktionen der Signale (s1, sr) zumindest über einen vorgebbaren Zeitbereich hinweg zu einem Gleichsignal addieren.

4. Verfahren nach Anspruch 3, **dadurch gekennzeichnet, dass** das erste Sendesignal (s1) und das Referenzsignal (sr) jeweils ein sinusförmiges oder rechteckförmiges Signal ist, und dass das erste Sendesignal (s1) eine vorgebbare Phasenverschiebung, insbesondere 180 Grad, zu dem Referenzsignal (sr) aufweist.

5. Verfahren nach einem der vorstehenden Ansprüche, **dadurch gekennzeichnet, dass** die Analyse folgende Schritte aufweist:
- Auswerten vorgebbarer Zeitbereiche des Summensignals (a1), um auf eine Dämpfung des Sendesignals (s1) durch die erste Übertragungsstrecke (190a) zu schließen,
- Rückschließen auf den Abstand als physikalische Größe aus der Dämpfung.

6. Verfahren nach Anspruch 5, **dadurch gekennzeichnet, dass** das Auswerten vorgebbarer Zeitbereiche das Integrieren des Summensignals (a1) über mehrere vorgebbare Zeitbereiche bzw. das Addieren des Summensignals (a1) über mehrere vorgebbare Zeitbereiche umfasst.

7. Verfahren nach einem der Ansprüche 1 oder 6, **dadurch gekennzeichnet, dass** jeweils unterschiedliche Zeitbereiche (T1, T2, T3, T4; T5, T6, T7, T8) des Summensignals (a1) ausgewertet werden, um auf die Dämpfung und/oder Phasenverschiebung des Sendesignals (s1) durch die erste Übertragungsstrecke (190a) zu schließen.

8. Verfahren nach Anspruch 1, **dadurch gekennzeichnet, dass** im Rahmen der Analyse auf eine Reflektivität eines mit dem Sendesignal (s1) beaufschlagten Objekts (600) geschlossen wird.

9. Verfahren nach einem der vorhergehenden Ansprüche, **dadurch gekennzeichnet, dass** in Abhängigkeit der erfassten Abstände zu der Straßenoberfläche (600) eine Niveauregulierung und/oder Fahrdynamikregelung des Kraftfahrzeugs (700) durchgeführt wird.

10. Verfahren nach einem der vorhergehenden Ansprüche, **dadurch gekennzeichnet, dass** im Rahmen der Analyse auf einen Zustand der Fahrbahn, insbesondere deren Oberflächenbeschaffenheit, geschlossen wird.

11. Verfahren nach einem der vorhergehenden Ansprüche, **dadurch gekennzeichnet, dass** Sendesignale (s1, s2) verschiedener Wellenlängen verwendet werden.

12. Verfahren nach einem der vorhergehenden Ansprüche, **dadurch gekennzeichnet, dass** die Reflektivität einer Fahrbahn ermittelt wird, und dass eine Fahrspurerkennung durchgeführt wird.

13. Verfahren nach einem der vorhergehenden Ansprüche, **dadurch gekennzeichnet, dass** aus einem an einer Straßenoberfläche (600) reflektierten Empfangssignal eine Geschwindigkeit des Kraftfahrzeugs (700) über Grund ermittelt wird.

14. Vorrichtung (100) zur Erfassung eines Abstands, mit
- einem Sender zum Senden mindestens eines ersten optischen Sendesignals (s1) mit einer vorgebbaren ersten Signalform über eine erste Übertragungsstrecke (190a), deren Übertragungsfunktion von der zu erfassenden physikalischen Größe abhängt,
- einem Empfänger zum Empfangen eines ersten optischen Empfangssignals (s1') an einem Ausgang der ersten Übertragungsstrecke (190a),
- einem Referenzsender zum Senden mindestens eines ersten Referenzsignals (sr) mit einer vorgebbaren Referenzsignalform über eine Referenzübertragungsstrecke (190r), die eine bekannte Übertragungsfunktion aufweist,
- einem Empfänger zum Empfangen eines ersten Referenzempfangssignals (sr') an einem Ausgang der Referenz-übertragungsstrecke (190r), und mit einer
- Auswerteinheit (130) zum Analysieren des ersten Empfangssignals (s1') und des Referenzempfangssignals (sr'), um auf die physikalische Größe, insbesondere einen Abstand, zu schließen, wobei im Rahmen der Analyse auf einen Abstand von dem Sender (500) des ersten Sendesignals (s1) zu einem Objekt (600) geschlossen wird,
und wobei die Auswerteinheit (130) eine Addiereinheit (131) zum Addieren des ersten Empfangssignals (s1') mit dem Referenzempfangssignal (sr') aufweist, um ein Summensignal (a1) zu erhalten, und wobei die Auswerteinheit (130) dazu ausgebildet ist, vorgebbare Zeitbereiche des Summensignals (a1) auszuwerten, um auf eine Phasenverschiebung des Sendesignals (s1) durch die erste Übertragungsstrecke (190a) zu schließen, und aus der Phasenverschiebung auf den Abstand rückzuschließen und wobei der Referenzsender zum Senden eines ersten optischen Referenzsignals (sr) und die Referenzübertragungsstrecke (190r) als optische Übertragungsstrecke ausgebildet ist und wobei die Addiereinheit durch eine einzige Fotodiode realisiert ist, die gleichzeitig eine Umwandlung der optischen Empfangssignale (s1', sr') in entsprechende elektrische Signale vornimmt, **dadurch gekennzeichnet, dass** die Auswerteeinheit (130) dazu eingerichtet ist, den Abstand (d1, d2) eines oder mehrerer Bereiche (701, 702), insbesondere einer Karosserie, eines Kraftfahrzeugs (700) von einer Straßenoberfläche (600) zu ermitteln, wobei die Auswerteeinheit dazu eingerichtet ist abwechselnd die Abstände (d1, d2, d3) zu einer Straßenoberfläche (600) und zu einem weiteren Objekt, insbesondere einem anderen Kraftfahrzeug (700'), zu ermitteln, und wobei die Ermittlung der Abstände auf dem Senden der Sendesignale von dem einen Sender beruht und wobei die für die Abstandsmessung verwendete Übertragungsstrecke neu ausgerichtet wird.

## Claims

1. Method for measuring a distance, comprising the following steps:
- transmitting at least a first optical transmission signal (s1) with a predefinable first signal form by means of a transmitter via a first transmission path (190a) whose transmission function depends on the physical variable to be measured, in particular the distance, wherein a first optical reception signal (s1') is obtained at an output of the first transmission path (190a),
- transmitting at least a first reference signal (sr) with a predefinable reference signal form over a reference transmission path (190r), which has a known transmission function, and wherein a reference reception signal (sr') is obtained at an output of the reference transmission path (190r),
- analyzing the first reception signal (s1') and the reference reception signal (sr') in order to infer the distance as physical variable, wherein, in the context of the analysis, the distance of the transmitter (500) of the first transmission signal (s1) from an object (600) is inferred,
wherein, for determining one of the distances, the analysis comprises the following steps:
- adding the reception signal (s1') to the reference reception signal (sr') by means of an adding unit in order to obtain a sum signal (a1),
- evaluating predefinable time periods of the sum signal (a1) in order to infer a phase shift of the transmission signal (s1) caused by the first transmission path (190a),
- inferring the distance from the phase shift, wherein the first reference signal (sr) is an optical signal and the reference transmission path (190r) is configured as an optical transmission path and wherein the adding unit is realized by a single photodiode, which at the same time transforms the optical reception signals (s1', sr') into respective electrical signals,
**characterized in that**, in the context of the analysis, the distance (d1, d2) of one or several areas (701, 702), in particular of a bodywork, of a vehicle (700) from a road surface (600) and the distance from another object, in particular another vehicle (700'), is determined, wherein the distances (d1, d2, d3) to the road surface (600) and to the other object are determined alternately, and wherein the determination of the distances is based on the sending of transmission signals from the one transmitter, and wherein the transmission path used for distance measurement is realigned.

2. Method according to claim 1, **characterized in that**, as a further step of the analysis, the first reception signal (s1') is compared with the reference reception signal (sr').

3. Method according to any one of the preceding claims, **characterized in that** the first transmission signal (s1) and the reference signal (sr) each have frequency parts other than zero, and **in that** the time functions of the signals (s1, sr) add up to a direct signal at least over a predefinable time period.

4. Method according to claim 3, **characterized in that** the first transmission signal (s1) and the reference signal (sr) each are a sinusoidal or a square-wave signal, and **in that** the first transmission signal (s1) has a predefinable phase shift, in particular 180 degrees, to the reference signal (sr).

5. Method according to any one of the preceding claims, **characterized in that** the analysis comprises the following steps:
- evaluating predefinable time periods of the sum signal (a1) in order to infer an attenuation of the transmission signal (s1) caused by the first transmission path (190a),
- inferring the distance as physical variable from the attenuation.

6. Method according to claim 5, **characterized in that** the evaluation of predefinable time periods comprises the integration of the sum signal (a1) over several predefinable time periods and/or the adding of the sum signal (a1) over several predefinable time periods.

7. Method according to one of the claims 1 or 6, **characterized in that** different time periods (T1, T2, T3, T4; T5, T6, T7, T8) of the sum signal (a1) are evaluated in each case in order to infer the attenuation and/or phase shift of the transmission signal (s1) caused by the first transmission path (190a).

8. Method according to claim 1, **characterized in that**, in the context of the analysis, a reflectivity of an object (600) the transmission signal (s1) impinges on is inferred.

9. Method according to any one of the preceding claims, **characterized in that** level control and/or driving dynamics control of the vehicle (700) is carried out as a function of the determined distances to the road surface (600).

10. Method according to any one of the preceding claims, **characterized in that**, in the context of the analysis, a state of the road surface, in particular its surface condition, is inferred.

11. Method according to any one of the preceding claims, **characterized in that** transmission signals (s1, s2) of different wavelengths are used.

12. Method according to any one of the preceding claims, **characterized in that** the reflectivity of a road surface is determined, and **in that** a lane recognition is carried out.

13. Method according to any one of the preceding claims, **characterized in that** a speed over ground of the vehicle (700) is determined from a reception signal reflected from a road surface (600).

14. Device (100) for measuring a distance, comprising
- a transmitter for transmitting at least a first optical transmission signal (s1) with a predefinable first signal form via a first transmission path (190a), whose transmission function depends on the physical variable to be measured,
- a receiver for receiving a first optical reception signal (s1') at an output of the first transmission path (190a),
- a reference transmitter for transmitting at least a first reference signal (sr) with a predefinable reference signal form via a reference transmission path (190r), which has a known transmission function,
- a receiver for receiving a first reference reception signal (sr') at an output of the reference transmission path (190r), and comprising an
- evaluation unit (130) for analyzing the first reception signal (s1') and the reference reception signal (sr') in order to infer the physical variable, in particular a distance, wherein, in the context of the analysis, a distance of the transmitter (500) of the first transmission signal (s1) from an object (600) is inferred,
and wherein the evaluation unit (130) comprises an adding unit (131) for adding the first reception signal (s1') to the reference reception signal (sr') in order to obtain a sum signal (a1), and wherein the evaluation unit (130) is configured to evaluate predefinable time periods of the sum signal (a1) in order to infer a phase shift of the transmission signal (s1) caused by the first transmission path (190a) and to infer the distance from the phase shift, and wherein the reference transmitter is configured to transmit a first optical reference signal (sr) and the reference transmission path (190r) is configured as an optical transmission path and wherein the adding unit is realized by a single photodiode, which at the same time transforms the optical reception signals (s1', sr') into respective electrical signals,
**characterized in that** the evaluation unit (130) is configured to determine the distance (d1, d2) of one or several areas (701, 702), in particular of a bodywork, of a vehicle (700) from a road surface (600), wherein the evaluation unit is configured to determine the distances (d1, d2, d3) from a road surface (600) and from another object, in particular from another vehicle (700'), and wherein the determination of the distances is based on the sending of transmission signals from the one transmitter, and wherein the transmission path used for distance measurement is realigned.

## Revendications

1. Procédé de détection d'une distance, comprenant les étapes suivantes :
- envoi d'au moins un premier signal d'émission optique (s1) avec une première forme de signal pouvant être prédéfinie au moyen d'un émetteur sur un premier trajet de transmission (190a), dont la fonction de transmission dépend de la grandeur physique à détecter, en particulier de la distance, dans lequel un premier signal de réception optique (s1') est obtenu à une sortie du premier trajet de transmission (190a),
- envoi d'au moins un premier signal de référence (sr) avec une forme de signal de référence pouvant être prédéfinie sur un trajet de transmission de référence (190r) qui présente une fonction de transmission connue, et dans lequel un signal de réception de référence (sr') est obtenu à une sortie du trajet de transmission de référence (190r),
- analyse du premier signal de réception (s1') et du signal de réception de référence (sr') pour conclure sur la distance en tant que grandeur physique, dans lequel dans le cadre de l'analyse, il est conclu à la distance de l'émetteur (500) du premier signal d'émission (s1) jusqu'à un objet (600),
dans lequel l'analyse pour déterminer une des distances comprend les étapes suivantes :
- addition du signal de réception (s1') avec le signal de réception de référence (sr') au moyen d'une unité d'addition pour obtenir un signal de somme (a1),
- évaluation de domaines temporels pouvant être prédéfinis du signal de somme (a1) pour conclure à un déphasage du signal d'émission (s1) au travers du premier trajet de transmission (190a),
- déduction de la distance à partir du déphasage, dans lequel le premier signal de référence (sr) est un signal optique et le trajet de transmission de référence (190r) est conçu en tant que trajet de transmission optique et dans lequel l'unité d'addition est réalisée par une photodiode unique qui entreprend parallèlement une conversion des signaux de réception optiques (s1', sr') en signaux électriques correspondants,
**caractérisé en ce que** dans le cadre de l'analyse, la distance (d1, d2) d'une ou plusieurs partie(s) (701, 702), en particulier d'une carrosserie, d'un véhicule (700) depuis une surface de chaussée (600) et la distance depuis un autre objet, en particulier depuis un autre véhicule (700') est/sont calculée(s), dans lequel, tour à tour, les distances (d1, d2, d3) jusqu'à la surface de chaussée (600) et jusqu'à l'autre objet sont calculées et dans lequel le calcul des distances repose sur l'envoi de signaux d'émission par l'un émetteur et dans lequel le trajet de transmission employé pour la mesure de distance est orienté de nouveau.

2. Procédé selon la revendication 1, **caractérisé en ce qu'**en tant qu'étape supplémentaire pour l'analyse, le premier signal de réception (s1') est comparé au signal de réception de référence (sr').

3. Procédé selon l'une des revendications précédentes, **caractérisé en ce que** le premier signal d'émission (s1) et le signal de référence (sr) présentent respectivement des parts de fréquence différentes de zéro et que les fonctions de temps des signaux (s1, sr) s'ajoutent en un signal d'égalité au moins par-delà une plage de temps pouvant être prédéfinie.

4. Procédé selon la revendication 3, **caractérisé en ce que** le premier signal d'émission (s1) et le signal de référence (sr) est respectivement un signal sinusoïdal ou rectangulaire et que le premier signal d'émission (s1) présente un déphasage pouvant être prédéfini, en particulier de 180 degrés, par rapport au signal de référence (sr).

5. Procédé selon l'une des revendications précédentes, **caractérisé en ce que** l'analyse présente les étapes suivantes :
- évaluation de domaines temporels pouvant être prédéfinis du signal de somme (a1) pour conclure à un affaiblissement du signal d'émission (s1) au travers du premier trajet de transmission (190a),
- déduction de la distance en tant que grandeur physique à partir de l'affaiblissement.

6. Procédé selon la revendication 5, **caractérisé en ce que** l'évaluation de domaines temporels pouvant être prédéfinis comprend l'intégration du signal de somme (a1) sur plusieurs domaines temporels pouvant être prédéfinis, respectivement l'addition du signal de somme (a1) sur plusieurs domaines temporels pouvant être prédéfinis.

7. Procédé selon l'une des revendications 1 ou 6, **caractérisé en ce que** des domaines temporels différents (T1, T2, T3, T4 ; T5, T6, T7, T8) respectifs du signal de somme (a1) sont évalués pour conclure à l'affaiblissement et/ou au déphasage du signal d'émission (s1) au travers du premier trajet de transmission (190a).

8. Procédé selon la revendication 1, **caractérisé en ce que** dans le cadre de l'analyse, il est conclu à une réflectivité d'un objet (600) touché par le signal d'émission (s1).

9. Procédé selon l'une des revendications précédentes, **caractérisé en ce qu'**en fonction des distances détectées jusqu'à la surface de chaussée (600), une régulation de niveau et/ou une régulation de la dynamique de conduite du véhicule (700) est/sont exécutée(s).

10. Procédé selon l'une des revendications précédentes, **caractérisé en ce que** dans le cadre de l'analyse, il est conclu à un état de la chaussée, en particulier la nature de sa surface.

11. Procédé selon l'une des revendications précédentes, **caractérisé en ce que** des signaux d'émission (s1, s2) de différentes longueurs d'onde sont employés.

12. Procédé selon l'une des revendications précédentes, **caractérisé en ce que** la réflectivité d'une chaussée est calculée et qu'une détection de voie est exécutée.

13. Procédé selon l'une des revendications précédentes, **caractérisé en ce qu'**une vitesse du véhicule (700) sur le sol est calculée à partir d'un signal de réception réfléchi sur une surface de chaussée (600).

14. Dispositif (100) de détection d'une distance, comprenant
- un émetteur pour envoyer au moins un premier signal d'émission optique (s1) avec une première forme de signal pouvant être prédéfinie sur un premier trajet de transmission (190a), dont la fonction de transmission dépend de la grandeur physique à détecter,
- un récepteur pour recevoir un premier signal de réception optique (s1') à une sortie du premier trajet de transmission (190a),
- un émetteur de référence pour envoyer au moins un premier signal de référence (sr) avec une forme de signal de référence pouvant être prédéfinie sur un trajet de transmission de référence (190r) qui présente une fonction de transmission connue,
- un récepteur pour recevoir un premier signal de réception de référence (sr') à une sortie du trajet de transmission de référence (190r) et avec une
- unité d'évaluation (130) pour analyser le premier signal de réception (s1') et le signal de réception de référence (sr') pour conclure à la grandeur physique, en particulier une distance, dans lequel dans le cadre de l'analyse, il est conclu à une distance de l'émetteur (500) du premier signal d'émission (s1) à un objet (600),
et dans lequel l'unité d'évaluation (130) présente une unité d'addition (131) pour ajouter le premier signal de réception (s1') avec le signal de réception de référence (sr') pour obtenir un signal de somme (a1), et dans lequel l'unité d'évaluation (130) est conçue pour évaluer des domaines temporels pouvant être prédéfinis du signal de somme (a1) pour conclure à un déphasage du signal d'émission (s1) au travers du premier trajet de transmission (190a), et pour déduire la distance à partir du déphasage, et dans lequel l'émetteur de référence est conçu pour émettre un premier signal de référence optique (sr) et le trajet de transmission de référence (190r) est conçu en tant que trajet de transmission optique et dans lequel l'unité d'addition est réalisée par une photodiode unique qui entreprend parallèlement une conversion des signaux de réception optiques (s1', sr') en signaux électriques correspondants,
**caractérisé en ce que** l'unité d'évaluation (130) est équipée pour calculer la distance (d1, d2) d'une ou plusieurs partie(s) (701, 702), en particulier d'une carrosserie, d'un véhicule (700) depuis une surface de chaussée (600), dans lequel l'unité d'évaluation est équipée pour calculer, tour à tour, les distances (d1, d2, d3) jusqu'à une surface de chaussée (600) et jusqu'à un autre objet, en particulier un autre véhicule (700'), et dans lequel le calcul des distances repose sur l'envoi des signaux d'émission par l'un émetteur et dans lequel le trajet de transmission employé pour la mesure de distance est orienté de nouveau.
